(19)

Europäisches Patentamt
European Patent Office
Office européen des brevets

(11) **EP 3 336 574 B1**

(12) **EUROPEAN PATENT SPECIFICATION**

(45) Date of publication and mention of the grant of the patent:
**06.05.2020 Bulletin 2020/19**

(51) Int Cl.:
*G01S 5/16* (2006.01)    *G01S 1/70* (2006.01)

(21) Application number: **17161400.1**

(22) Date of filing: **16.03.2017**

(54) **SYSTEM FOR DETERMINING A POSITION OF A TAG AND CORRESPONDING METHOD**

SYSTEM ZUR BESTIMMUNG EINER POSITION EINES ETIKETTS UND ENTSPRECHENDES VERFAHREN

SYSTÈME POUR DÉTERMINER UNE POSITION D'UNE ÉTIQUETTE ET PROCÉDÉ CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2016 EP 16203833**

(43) Date of publication of application:
**20.06.2018 Bulletin 2018/25**

(73) Proprietor: **Fraunhofer-Gesellschaft zur Förderung der angewandten Forschung e.V.**
**80686 München (DE)**

(72) Inventor: **GHIMIRE, Birendra**
**90491 Nürnberg (DE)**

(74) Representative: **Zinkler, Franz et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
**US-A1- 2006 087 474**    **US-A1- 2012 022 826**
**US-A1- 2015 323 647**

- **AMINIKASHANI MOHAMMADREZA ET AL: "Indoor positioning with OFDM Visible Light Communications", 2016 13TH IEEE ANNUAL CONSUMER COMMUNICATIONS & NETWORKING CONFERENCE (CCNC), IEEE, 9 January 2016 (2016-01-09), pages 505-510, XP032886979, DOI: 10.1109/CCNC.2016.7444832 [retrieved on 2016-03-30]**
- **SOO-YONG JUNG ET AL: "TDOA-based optical wireless indoor localization using LED ceiling lamps", IEEE TRANSACTIONS ON CONSUMER ELECTRONICS, IEEE SERVICE CENTER, NEW YORK, NY, US, vol. 57, no. 4, 1 November 2011 (2011-11-01), pages 1592-1597, XP011398435, ISSN: 0098-3063, DOI: 10.1109/TCE.2011.6131130**

EP 3 336 574 B1

## Description

The present invention relates to a system for determining a position of a tag. A tag is a device which is attached to an object whose kinematic parameters, such as position, velocity, orientation and so on is to be ascertained in a common reference frame. Furthermore, the invention relates to a method for determining a position of a tag.

The technologies that have been considered until now for indoor positioning can be grouped into the following broad categories:

a) Proximity detection:

a. Use of Beacons:
For example, a beacon detects whether a user is in its vicinity. The beacon is usually emitted by an anchor. Such systems only require detection of a steady signal. Additionally, the signal strength measurement can be done to estimate the distance between a beacon and a user.

b. Use of Radio Frequency Identification (RFID) tags:
Similar to above, the tag in form of RFID device comes in vicinity of an anchor and is detected. Positioning using Camera identifying known features. A camera reading a QR code mounted on the ceiling and thereby deducing positioning from the information contained there would be an example of such system which is, for example, described in: "QRPos: Indoor Positioning System for Self-Balancing Robots based on QR Codes" by Grigori Goronzy, Mathias Pelka and Horst Hellbrück.

b) Localization based on Fingerprinting using WLAN or Bluetooth Signals:
The approaches in this group rely on building a database of features such as RSSIs and comparing the feature computed by the tag to the available database to obtain the position. Several approaches to build such databases, for example, using crowd are known.

c) UWB-based positioning
Ultra-wideband signals are narrow in time, so immune to multipath. Plus the rising and falling edges are faster. As such, the time can be estimated easily.

a) Light-based Methods:

a. VLC-based beaconing: Using a VLC (LED) to detect Cell ID, e.g. "Long Distance VLC-based Beaconing for Indoor Localization Applications" by Gergel Zachár, Gergel Vakulya, Gyula Simon or US 2016/0248506 A1.

b. LED based positioning-based on illumination: Measurement of distance based on illumination at a given receiver by a LED transmitter which is turned on. The transmitters are turned on and off to estimate individual illuminances. By comparing to a path loss model, the ranges are computed and the position of user is calculated. This method is described in US 2016/0248506 A1, CN105674986, CN105738868 or CM2016269112.

c. Visible light positioning by measuring angles ("Indoor Visible Light Positioning with Angle Diversity Transmitter" by Liang Yin, Xiping Wu, Harald Haas, IEEE 82nd VTC-Fall, 2015 or "Visible Light Positioning: A Roadmap for International Standardization" by Jean Armstrong, Y. Ahmet Sekercioglu, and Adrian Neild, IEEE Communications Magazine, Dec. 2013).

The algorithms such as TOA (used with primarily GPS) and TDOA (used primarily in cellular networks) are known solutions to compute position in outdoor environments.

US 2015/0323647 A1 discloses methods to determine a position using light sources The method includes processing an output of a photodetector based on anticipated codes to identify multiple light sources from which the photodetector receives light at a first position, determining locations of the identified light sources, and determining a location of the first position based on the locations of the identified light sources. Modulation of the light sources may use orthogonal frequency division multiplexing.

The object of the invention is to provide a system and a method for determining the position of a tag using a light-based communication network obtaining a good precision and being an alternative to the state of art.

This object is achieved by a system according to claim 1 and a method according to claim 16.

A system for determining a position of a tag comprises:

- a plurality of anchors, wherein the anchors of the plurality of anchors are located at known positions and are configured to emit light signals,
- a controller, wherein the controller is configured to control anchors of the plurality of anchors with regard to emitting light signals, and wherein the controller is configured to treat a given number of anchors of the plurality of anchors as an anchor cluster such that anchors belonging to the anchor cluster emit light signals comprising different pilot signals using different frequencies and/or different time slots,
- at least one receiver associated with the tag, wherein the receiver is configured to receive light signals, and
- an evaluator, wherein the evaluator is configured to determine the position of the tag based on light signals received by the receiver.

In the description herein, the term 'tag' refers to the object whose positioning is to be determined and 'anchor' to an object whose position is known in a chosen reference frame and which at least emits light signals. Network refers to the collection of anchors, infrastructure and all of the processing logic behind. The light signals are in one embodiment visible signals and in a different embodiment infrared signals.

The solution presented in this invention disclosure pertains to positioning of one or more communication devices capable of receiving and/or transmitting signal modulated with data. The invention pertains to positioning of a - possibly moving - object (in the following called tag) in indoor environment, where infrastructure for optical wireless communication, preferably visible light communication (VLC) is in place.

The invention in at least one embodiment allows precise indoor positioning in an OFDM-based communication network using optical (visible, infrared) signals.

The system, thus, comprises various anchors preferably mounted on the ceiling or a suitable substrate. These anchors are located at known positions and are capable of emitting light signals. A controller treats some of the anchors as an anchor cluster. The anchors of the anchor cluster are controlled concerning their emission behavior such that the anchors emit different pilot signals. Hence, the pilot signals allow the tag to identify the anchor which transmitted the pilot signal and to use this information to deduce the location or the origin of the received light signals. Furthermore, each anchor within the anchor cluster uses a different resource for emitting the pilot signal. The pilot transmitted by one anchor within the cluster is separated from the pilot transmitted by another anchor within the same cluster by separating it along the frequency dimension or along the time dimension. However, the anchors belonging to different clusters may transmit the pilot on the same time or frequency resource. The allocation is statically or dynamically coordinated so that the interference of signal transmitted by one anchor to another is limited. The coordination allows the precision in estimating the parameters of the received light signals. The evaluator determines the position of the tag based on the parameters of the light signals received by the receiver of the tag.

If the parameters of the received light signals from all anchors within the anchor cluster can be estimated with the accuracy needed for computing position, the evaluator uses all respective data for determining of the position of the tag. In case that at least one anchor is shadowed, additional data provided by different sensors (which are connected to or possibly comprised by the tag) and/or data stored e.g. within the tag is used for compensating the lacking information of the anchor with an obstructed path of the light signal. Additionally, the aforementioned information obtained from the sensors may also be used to improve the accuracy of the determined position of the tag. In one embodiment, the system is designed so that a tag within the coverage area presumably receives signals from all anchors within an anchor cluster. In the other embodiment, the system is so designed that the tag within the coverage area receives signals from only one anchor at a time. In such situation, the anchor cluster consists of only one anchor. In this case, for example a motion and/or position sensor of the tag is used.

In one embodiment, the evaluator is associated with the tag. In a different embodiment, the evaluator is associated with the controller. In the two foregoing embodiment, the evaluator is associated with or is comprised by the movable part (i.e. the tag) or is associated with a fixed part (i.e. anchors and controller) of the system. In a further embodiment, the evaluator comprises at least two components or sub-elements that are associated with the tag and with the controller, respectively. Hence, in the last embodiment, both the tag and the controller comprise a part of the evaluator.

An embodiment specifies that at least some anchors of the plurality of anchors are located such that these mentioned anchors are evenly distributed.

An embodiment specifies that at least some anchors of the plurality of anchors are located such that these mentioned anchors are unevenly distributed.

The above mentioned even or uneven distribution refers in one embodiment to the anchors belonging to the anchor cluster.

In an additional or alternative embodiment, anchors of the plurality of anchors are located along a curve. The curve is in one embodiment a line or a path. In this embodiment, at least some anchors are for example located along the ceiling of a corridor.

According to an embodiment, the anchors belonging to the anchor cluster are configured to emit light signals comprising information about the respective position of the anchors. In this embodiment, the anchors emit light signals carrying data about the position of the anchors to be used e.g. by the evaluator for determining the position of the tag.

In an additional or alternative embodiment, the anchors belonging to the anchor cluster are configured to emit light signals using orthogonal frequency-division multiplexing. The system particularly of interest here is optical orthogonal frequency-division multiplexing (O-OFDM). The optical OFDM is also known by other names such as DMT-based visible light communication etc.

The controller is configured to assign the given number of anchors of the plurality of anchors dynamically to the anchor cluster based on a change of the position of the tag and/or based on a movement of the tag and/or based on a signal strength of a light signal emitted by the anchors and received by the receiver and/or based on a signal strength of a light signal emitted by a transmitter associated with the tag and received by uplink receivers associated with anchors of the plurality of anchors. In case of a moving tag the dynamical assignment allows e.g. a handover as a new anchor cluster comprises at least one anchor of a foregoing anchor cluster. The dynamical assignment also allows to react to a at least partially shadowing of anchors of the cluster. In one embodiment, a bidirectional communication between the tag and the anchors is given.

According to an embodiment, the controller is configured to assign anchors of the plurality of anchors to various anchor groups. The controller is configured to control anchors of the plurality of anchors such that anchors belonging to an anchor group within the anchor cluster and anchors within the mentioned anchor group but outside of the anchor cluster emit light signals comprising identical pilot signal. Additionally or alternatively, these anchors emit light signals using identical frequencies and/or identical time slots.

In a further embodiment, the receiver is configured to evaluate an orientation relative to anchors of the plurality of anchors by comparing a signal strength of received light signals.

According to an embodiment, the receiver is configured to determine phase values and/or receiving intensities (i.e. the intensity of the received light signal) based on the pilot signals of the received light signals, and the evaluator is configured to evaluate the position of the tag based on a time of arrival method and/or based on a time difference of arrival method.

For measurement of individual delays using reference signals, "Time and frequency synchronization in optical wireless OFDM networks" by Birendra Ghimire et al. describes how the phase measurement can be utilized to eliminate phase rotations of constellation points for reducing bit errors in optical OFDM communication. The principle of delay in time domain causes rotation in frequency domain is a fundamental signal processing technique. However, simple measurement of rotation in presence of noise and other abnormalities do not allow the level of precision required for positioning. Several methods outlined within this specification allow the measurement of range to be improved to allow for TDOA/TOA based position for indoor visible light-based positioning. For this embodiment, preferably seven anchors belong to the anchor cluster. and are preferably in a regular grid and extend seamlessly. In other embodiments, the cluster is irregular. In an additional or alternative embodiment, the cluster does not extend seamlessly in which case a cluster size of five anchors suffices for position computation with TDOA approach.

In a further embodiment, the evaluator is configured to stop a determination of the position of the tag in case data determined concerning the position of the tag is within a given precision range. This allows to save power.

According to an embodiment, the evaluator is configured to use stored data concerning previous positions of the tag and/or concerning a movement of the tag and/or concerning phase values and/or concerning receiving intensities of received light signals and/or concerning a map of an area in which the system is at least partially located for determining the position of the tag in case that receiving light signals from at least one anchor belonging to the anchor cluster is disturbed and/or in order to increase the accuracy of the determination of the phases and/or of the determination of the position of the tag based on the determined phases. In this embodiment, historical data from foregoing measurements/determinations of the position of the tag and/or additional data is used for determining the current position of the tag.

In a further embodiment, at least one movement and/or position dependent sensor is associated with the tag. The sensor is configured to provide measurement data dependent on a movement and/or on the position of the tag. The evaluator is configured to evaluate the measurement data provided by the sensor for determining the position of the tag in case that receiving light signals from at least one anchor belonging to the anchor cluster is disturbed and/or in order to increase the accuracy of the determination of the phases and/or of the determination of the position of the tag based on the determined phases.

According to an embodiment, the evaluator is configured to determine values of the position of the tag based on different light signals received by the receiver several times and to combine the evaluated values. In this embodiment, the evaluator determines various times the position of the tag and calculates an average value.

In the foregoing embodiments, the anchors emitted light to be received by a receiver associated with the tag. This is a downlink transmission. In the following embodiment, an uplink connection is added so that the tag is equipped with a transmitter of its own. The transmitter of the tag emits also signals - preferably also light signals - that are received by at least one uplink receiver associated with an anchor. In one embodiment, each anchor is associated with an uplink receiver. Therefore, in this embodiment, each anchor is enable to emit light signals and to receive signals or light signals.

In a further embodiment, the evaluator is configured to determine at least one value of the position of the tag based on signals emitted by the anchors of the anchor cluster and received by the receiver. The evaluator is configured to determine at least one value of the position of the tag based on signals emitted by a transmitter associated with the tag and received by at least one uplink receiver associated with an anchor of the plurality of anchors. Finally, the evaluator is configured to combine the determined values of the position of the tag.

According to an embodiment, the system further comprises uplink receivers associated with anchors of the plurality of anchors, the uplink receivers are configured to receive signals emitted by a transmitter associated with the tag, and the uplink receivers are configured to evaluate whether data comprised by the received signals is error free and to determine phase values based on error free data. The evaluation of the received data is e.g. based on a CRC. If the data is error free, it is used as a kind of pilot signal emitted here by the transmitter of the tag.

In a further embodiment, a transmitter associated with the tag is configured to emit signals comprising data known to the evaluator, and the evaluator is configured to use the known data for evaluating phases of the signals emitted by the transmitter.

According to an embodiment, at least one anchor of the plurality of anchors is configured to emit a signal indicating an availability of pilot signals for determining the position of the tag.

In a further embodiment, a transmitter associated with the tag is configured to emit a positioning signal request signal, and the controller is configured to initiate in case of a received positioning signal request at least one anchor of the plurality of anchors to emit at least one light signal comprising a pilot signal.

In an additional or alternative embodiment, a transmitter associated with the tag is configured to emit a request signal in case further light signals and/or further pilot signals are required for determining the position of the tag.

In an additional or alternative embodiment, a transmitter associated with the tag is configured to emit a request signal comprising information about an anchor from which further light signals and/or further pilot signals are required. In this embodiment, the tag emits via its transmitter e.g. data identifying the anchor of the anchor cluster from which more signals or pilot signals are required.

In an additional or alternative embodiment, a transmitter associated with the tag is configured to emit a request signal in case at least one further anchor is required for determining the position of the tag, and the controller is configured to treat the given number of anchors and at least one additional anchor of the plurality of anchors as an anchor cluster. In this embodiment, the tag increases the size of the anchor cluster as a consequence of a request signal.

According to an embodiment, at least the anchors belonging to the anchor cluster are time synchronized, and wherein the tag is configured to perform time synchronization at least with the anchors belonging to the anchor cluster.

In an embodiment, a synchronization between anchors is performed using a data cable between at least two anchors.

An embodiment directed especially concerning the synchronization comprises the following:

At least one receiver (e.g. belonging to the tag or an additional receiver special for this embodiment) is permanently or temporarily located at a known position. The evaluator is configured to determine distances and/or phases and/or amplitudes and/or respective errors based on the known position and to provide corresponding data to the controller. The controller is configured to take care of the provided data. In this embodiment, the evaluator compares e.g. the results based on the anchors of the anchor cluster with the known position of the receiver. In an embodiment, the respective error or errors determined by the evaluator are passed on to controller, which corrects for the deviant parameters. In one embodiment, the deviation is monitored continuously. If the tag is connected via data cable, the deviation is passed via cable, else wireless communication.

In a further embodiment, at least one movement and/or position dependent sensor is associated with the tag. Further, the evaluator is configured to provide data to the controller for a synchronization in case data provided by the movement and/or position dependent sensor indicate that the tag rests on a position. Here, the preferably mobile tag is accessed with a position and/or motion dependent sensor allowing to perform motion detection. When the object/tag is in the state of rest for a long or e.g. pre-defined time and preferably also when the position of the tag is precise enough, it can further aid synchronization of network by monitoring the deviations. Hence, the evaluator starts determining the respective data based on the known position of the tag.

In an optimal situation the light signals of all anchors of the anchor cluster are available. If less anchors are available, then e.g. the method for determining the position is modified or data provided by additional sensors is used. This allows in one scenario that the anchor cluster consists of only one anchor or of anchors separated such that they can be considered as individual anchors.

In a further embodiment, a scenario where the deployment area is not densely populated with anchors is envisioned. This means the tag may see fewer than five anchors normally needed for computing positioning solution. A typical scenario would be navigation through corridors, which is a common positioning scenario in indoor environments. Where centimeter or decimeter level accuracy is not critical, inertial navigation using inertial sensors (accelerometers, gyroscopes) and further aided by digital compasses and digital barometers can be used. However, sensor-errors in consumer grade sensors accumulate and cause position and heading errors and render inertial navigation useless unless the errors are estimated and corrected regularly. The correction capability is provided by optical wireless network in the embodiment.

The embodiments described above can be described by the following deployment scenarios:

1. Precise positioning system with seamless handover (regularly repeating clusters) where the anchor points are distributed uniformly:
The cluster has in this embodiment seven units, which extends itself regularly both along the x-axis and y-axis. Precise position can be computed without additional sensors, nevertheless the positioning solution may additionally be complemented by motion-dependent sensors and other sensors and sensor fusion may be carried out for final position solution.

2. Precise positioning system with a single cluster:
A minimum of five anchors are visible for TDOA positioning. The anchor points may be evenly or unevenly distributed. TDOA can be carried out but no seamless handover.

3. Precise positioning complemented with sensors:
In this embodiment, a minimum of five anchors required for TDOA positioning is not available (e.g. due to shadowing). Therefore, fusion of measurements from inertial sensors and remaining anchors is utilized to compute position.

4. Coarse positioning in a rank-deficient scenario:
In this embodiment, the number of anchors is not sufficient to compute TDOA solution. The system relies on detecting the location of maxima in intensity of signal and inertial sensors and motion monitoring to compute position.

5. Coarse position in sparse scenario:
In this embodiment, the single anchors are sparsely distributed. The system relies in this case on navigation with inertial sensors, with sporadic updates and fusion e.g. with an available indoor map.

The object is also achieved by a method for determining a position of a tag.

The method comprises at least the following steps:

- treating a given number of light signals emitting anchors located at known positions as an anchor cluster such that anchors belonging to the anchor cluster emit light signals comprising different pilot signals using different frequencies and/or different time slots,
- receiving light signals emitted by anchors of the plurality of anchors, and
- evaluating the position of the tag based on the received light signals.

In the foregoing, aspects of embodiments and features of the system were discussed. It is clear that these aspects also represent a description of corresponding embodiments of the method.

The invention will be explained in the following with regard to the accompanying drawings and the embodiments depicted in the accompanying drawings, in which:

Fig. 1    shows an example of resource allocation in OFDM,

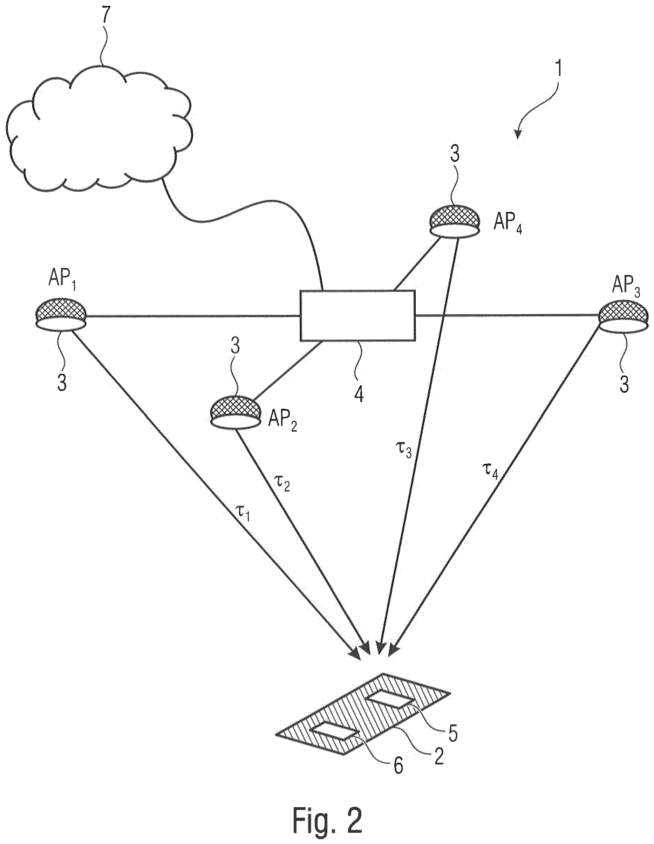

Fig. 2    depicts an embodiment of an optical wireless positioning system,

Fig. 3    depicts an example of possible allocation of pilots within a cluster,

Fig. 4    shows an example of resource allocation in OFDM,

Fig. 5    depicts a part of an embodiment of a system,

Fig. 6    depicts an estimation of phase and subsequently time offset with a SNR of 10 dB and offset of 40ns,

Fig. 7    shows a typical delay in a room 6 m x 6 m with four anchors at the center of the room laterally separated from the nearest neighbor by 2 m,

Fig. 8    depicts a system with anchors located within a corridor,

Fig. 9    depicts a Lambertian Optical Transmitter with two concentric circles depicting isometric lines of power on the left and two variants of receivers of the tag are depicted on the right side and

Fig. 10   shows the light distribution of three anchors arranged along a line in a corridor.

For at least one embodiment of the system, it is briefly introduced how optical OFDM (optical DMT Modulation) works.

Data is impressed into visible light using an OFDM technique, which is in effect taking the IFFT of the baseband modulated symbols (such as PSK/QAM etc.). It is usually to give a 0 value to the -N/2 and the 0th bin and the nth subcarrier carries the complex conjugated symbol carried in the nth carrier. This generates a real-valued signal, which can be used to drive LED units. This signal used to drive LED produces fluctuations in illumination of the LED, which is imperceptible to human eye but easily detected by an optical receiver (e.g. a photo diode) which converts the fluctuation of illumination back to electrical signals. By performing FFT on the received signal, baseband signals are obtained. By performing applicable receiver processing algorithms (noise filtering, equalization, detection etc.) the original constellation can be obtained.

Usually, the last $N_G$ values of the IFFT are copied to the front to serve as a guard band, used for multipath mitigation, ISI mitigation, equalization and so on.

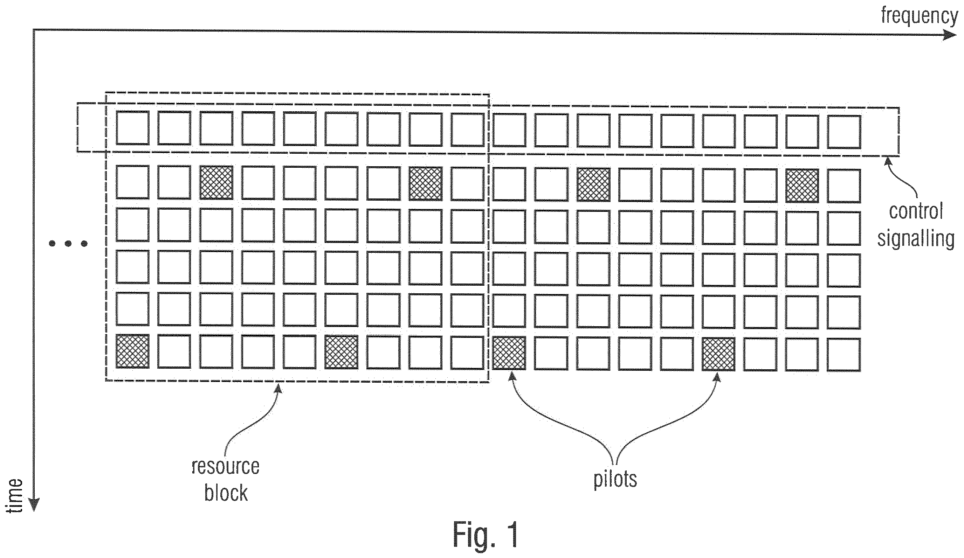

A typical resource allocation in OFDM-based systems is depicted in Fig. 1. The control signaling is used when the available resources are shared among multiple users (multiple access technique) to indicate what is to be expected in the payload. There are also known reference signals known as pilots. Each served user is allocated one or more resource block.

Currently, systems that allow a transmission bandwidth of 120 MHz seems to be a norm for optical data transmission, which allow for estimation of delay in ns range, which allow indoor positioning with optical wireless signals.

The system 1 of Fig. 1 comprises the tag 2 with a receiver 5 and an evaluator 6. Further, there are anchors 3 which emit light signals and which are controlled by a controller 4. The controller 4 is also connected with a data storage 7 which is for example a cloud or a network.

For the positioning network, the receiver 5 of the tag 2 receives signal from light emitting diode (LED) modules separated in space. The anchors $AP_1$ to $AP_4$ in

the embodiment of Fig. 1 are for example four LED modules within the same physical lamp, or four different lamps that are time synchronized and controlled by the same processor as an embodiment of the controller 4. If the lighting system (for example big ceiling mounted lighting systems) is big consisting of several arrays of LEDs, then the system 1 can be divided into several segments, and each segment behaves like an anchor point.

Each of the anchors 3 within an anchor cluster has its own pilot signal, by which the receiver can identify the origin of the signal and the delay. The available subcarriers are allocated to anchors such that a device (a tag) does not receive pilots on the same sub-carrier from two or more anchors. Likewise, if the tag 2 is the one emitting the signal and the anchors are photodiodes (uplink transmission), the location of pilot signals or simply resource blocks are so assigned that the anchor network can identify the signals from each of the users uniquely.

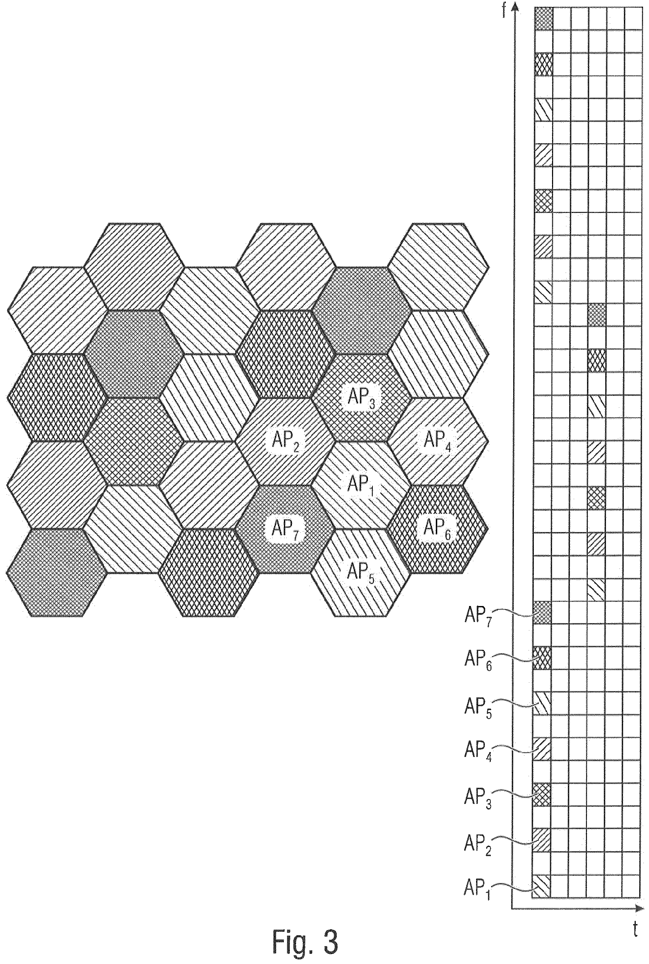

This means each anchor 3 gets a unique allocation of subcarrier and time slot for transmitting a pilot. The uniqueness must be preserved only within a cluster. An example is shown in Fig. 3, where each shade represents a group and a group of seven shades represents a cluster. Within the cluster, all seven anchors ($AP_1$ to $AP_7$) can be detected by the tag 2. The positioning pilots, shade-coded on the grid of sub-carrier vs time, will only be transmitted by the anchor with the same color. All other anchors will remain silent on this subcarrier at this time. As the optical power decays inversely with distance, another anchor in the same group can reuse the pilot without causing problems with estimation.

The above configuration with seven anchors also helps maintain that there are usually at least five anchors from the same group required for position fix. Fusion of accelerometer is done in one embodiment to increase robustness when temporarily more anchors are blocked.

The system 1 is in one embodiment purely a positioning system (for some implementations) and for other implementation, positioning could be a service together with communication networks.

In an embodiment, a positioning system is given and dedicated positioning signals are always present. The number and location of available positioning system may be fixed or reconfigured by the network possibly on the users demand.

In a different embodiment, an integrated communications and positioning system 1 is given. There, the positioning signals may not necessarily be present or the minimal set of positioning signals may be present.

In this case and according to an embodiment, the positioning pilots may be dedicated pilots, but the usual demodulation pilots can also be used for this purpose. The user has the possibility of requesting special dedicated pilots from a particular anchor point. Likewise, the network can reconfigure the allocation of pilot for positioning - based on measurement and feedback.

Furthermore, optical attocells (coverage range of one LED access point) are smaller in diameter compared to typical femto-cells or WiFi cells. The positioning service could enable seamless handover of a tag (here also a communication device) between cells. In particular, two or more cells could simultaneously serve data to a user, thereby ensuring that the connection of a user to a network is not broken when the user approaches the edge of coverage of an attocell. This could mean an attocell could be virtually-seamless.

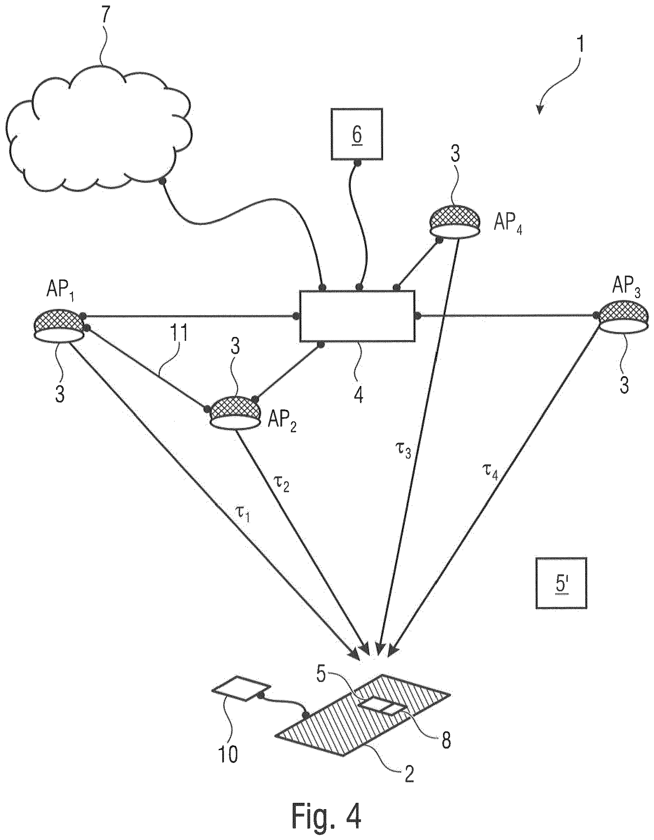

In an embodiment, all anchors 3 are time synchronized. This can be achieved by monitoring a reference transmitter or by a reference station monitoring the synchronization and giving the feedback. The signals transmitted by the anchors 3 are received at the tag 2 via its receiver 5 as shown in Fig. 4. The phase shift on the pilot signals can be measured and the delay estimated.

The anchors 3 are time-synchronized. However, the tag 2 (which could be moving) is not synchronized per se. For decoding an OFDM symbol, the receiver (tags) are preferably able to synchronize to the transmitter (anchors). Assuming that such level of synchronization, which is much coarse compared to that needed for positioning, the actual delay can be estimated by monitoring the phase information.

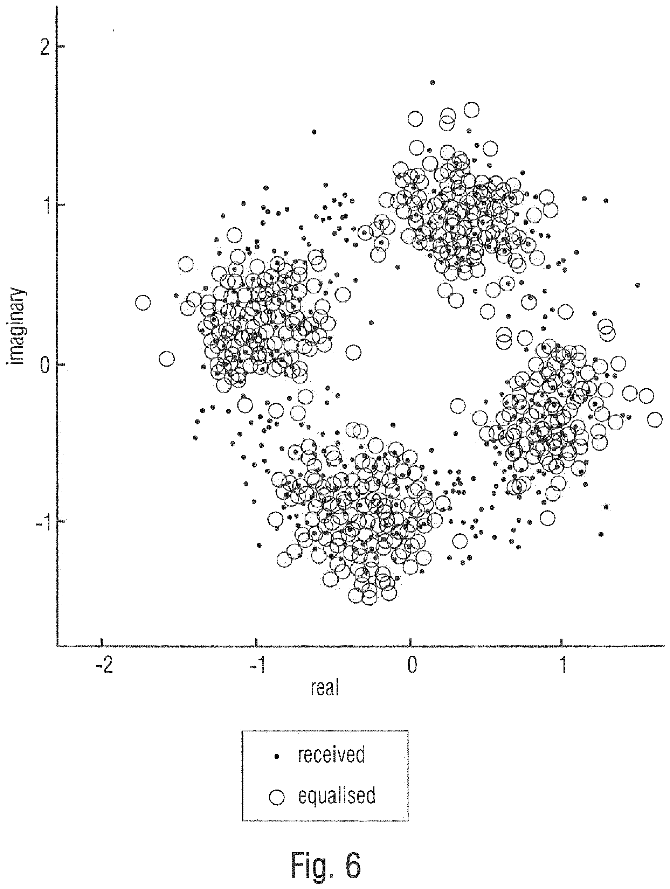

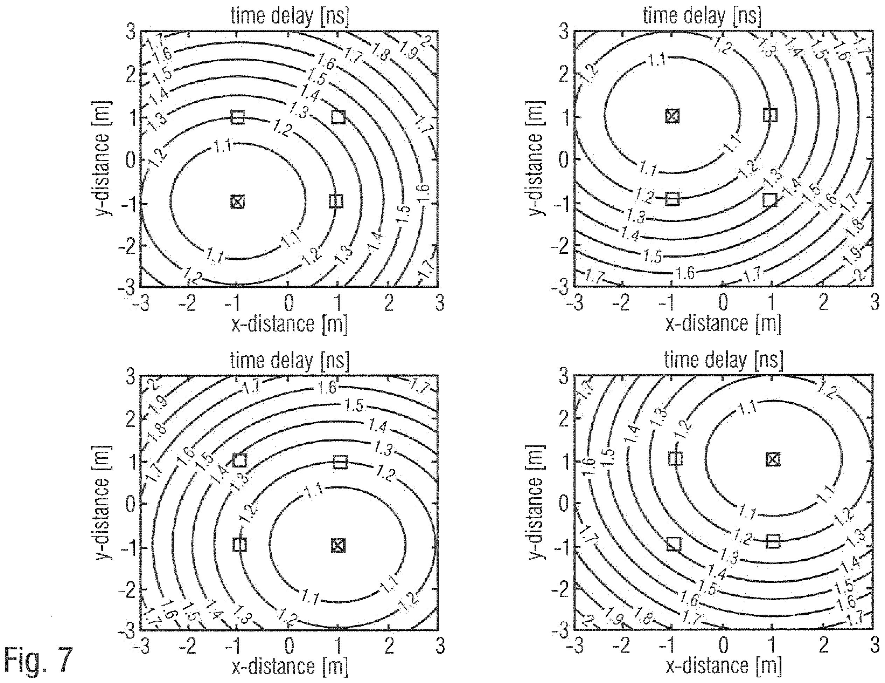

In Fig. 6 a depiction of estimation of phase and subsequently time offset with a SNR of 10 dB and offset of 40 ns is given. The delay of 40 ns figure is a big exaggeration for typical indoor scenarios. However, this is used to illustrate how the signal constellation changes with delay. The typical values are shown in Fig. 7.

Fig. 7 provides a depiction of typical delay in a room 6 m x 6 m with four anchors at the center of the room laterally separated from the nearest neighbor by 2 m. A 3 m height between anchors and tag is assumed (reflecting a typical production hall).

The location of the anchors can be transmitted as a payload data.

For synchronizing (i.e. estimating the clock offsets), two exemplary embodiments are discussed:

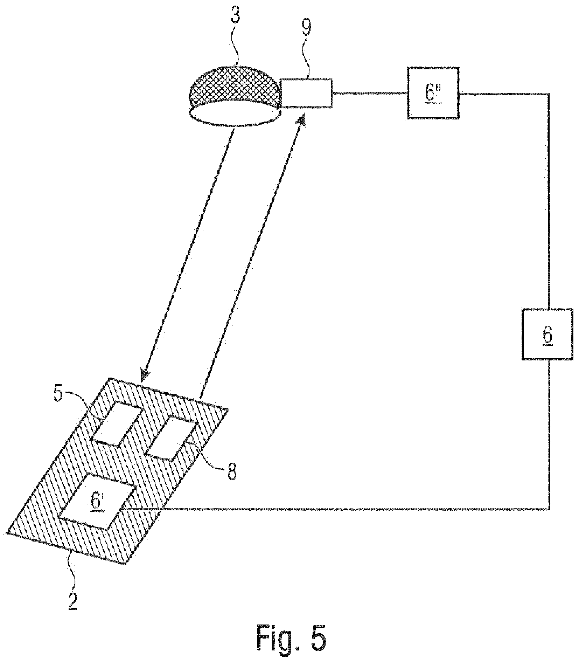

First example: Wirelessly synchronization (compare Fig. 5):

The challenge is to estimate propagation time, in presence of clock error.

The errors could be between the anchor network - i.e. at least the anchors of the anchor cluster - (which is synchronized) and the tag which is not synchronized to the network. In this case, time-difference of arrival (TDOA) is appropriate, as the delay of other anchors with respect to a given anchor (usually the closest one, thereby allowing more precision) can be determined.

The nodes of the anchor network (the anchors themselves) could be out of sync. This can be mitigated through the following steps:

- Placing the tag in a precisely known location

- The distance between the tag and the network is therefore precisely known.
- The "expected" time of flight to each of the anchor can be computed or pre-stored at the anchors.
- Deviation from the expected value can be corrected for by each anchor point.
- Such deviations can be computed by either mobile tags, or fixed tags (monitoring units). The transmission of signal can be downlink or uplink.

TDOA is valid both in the uplink or the downlink transmission but requires at least 5 anchors for a meaningful position fix.

TOA approach requires precise distance to each anchor and requires the clock of the anchor network and the tag are synchronized. Three anchors suffice if synchronization is perfect.

In a multi-user scenario, it is practical for the users to synchronize to the network, rather than other way around. Therefore this approach would be practical for downlink scenario.

The procedures are:

- Placing the tag at a known position (calibration position) and switching to calibration mode.
- The calibration parameters are conveyed to the tag, either on request or through broadcast.
- The tag computes 'expected' time of flight and computes deviation from the actual time of flight. When tight synchronization is achieved, the device changes to tracking mode.

If the user is capable of uplink transmission, the user reports the computed position periodically to the network.

Assuming synchronized network for TDOA computation, the anchor side computes the user position and checks if the position reported by the user are consistent. Since the tag shares the common clock in uplink and downlink, the corrections can be pushed to the user by the network (as a payload message).

In each of the above cases, initial estimation of clock offset between the entities in the network could be improved by utilizing the knowledge of following:

- A rough initial fix or a precise fix (e.g. placing the tag at a known location)
- Valid ranges of pseudo ranges in the deployment environment.
- Initial guess of position obtained by reference signal power measurement from neighboring cells and using relevant path loss model for environment.
- Such information can be made available to the mobile unit by the underlying communication network as a payload data.

Phase change can be monitored in combination with inertial sensors, which will limit the errors given that one or more anchor points are briefly out of sight, e.g. blocked by other objects.

In Fig. 5 a tag 2 is shown which comprises a receiver 5, a transmitter 8 (this can also be named uplink transmitter) and an evaluator component 6'. The receiver 5 receives the light signals of an anchor 3 in the downlink direction. The transmitter 8 emits - here light - signals in the uplink direction. The uplink signals are received by the uplink receiver 9 comprised by the anchor 3. The anchor 3 and here especially the uplink receiver 9 is connected to a further evaluator component 6".

The two evaluator components 6', 6" are comprised by the tag 2 and by the anchor 3 respectively, and allow to evaluate the data and the received signals of the respective units (tag 2 and anchor 3). The evaluator components 6', 6" are connected with the evaluator 6 which combines the respective data.

Second example: Synchronizing using Cable (compare Fig. 4)

The anchor 3 - here called $AP_1$ - transmits timing information (e.g. clock signal) indicating when the OFDM symbol left the anchor. The timing could be transmitted ahead of the actual OFDM symbol transmission. The offset between this timing information and transmission of OFDM symbol is known to the receiver (tag).

The length of the synchronization cable 11 between the anchor $AP_1$ and the anchor $AP_2$ is precisely known, so the propagation delay can be precisely estimated. By comparing the transmitter clock with the receiver clock, the clock offsets and errors can be estimated and accounted for. When this information is received at the receiver 5, the receiver 5 derives the clock offset and eliminates the clock error.

The time of flight (or time of arrival) can be easily estimated when the clock error is eliminated as above.

A further synchronization is performed in the embodiment shown in Fig. 4 by an additional receiver 5' located at a known position. In a different embodiment, the receiver 5 of the tag 2 can be used for the additional synchronization when the position of the tag 2 is well known and when it is detected that the tag 2 is not moved at least for the time for performing the additional synchronization.

If the optical communication system is bidirectional, the tag 2 emits optical OFDM, and the anchors (which are time synchronized) are able to deduce phase information and compute the TDOA and compute position fix. The processor / controller 4 on the network side may trigger measurement of shot noise at the receiver side and use it to decide whether the position computation is more reliable on the receiver side or on the network side. This is important because the shot noise produced by the photodiode could be different for the PD mounted on the mobile unit (tag 2) or on the transmitter (anchor 3).

In addition, when the SNR is poor, there would be errors in estimation of TDOA or TOA. To mitigate this, the following embodiments are given:

1) Typically positioning does not have stringent real-time requirement (i.e. multiple frames can be used) - for example - it is acceptable to have position within 1 second within the indoor environment.
2) Filtering the estimated delay over multiple OFDM symbols, assuming the tag position does not significantly change within small fractions of second and using the law of large numbers to estimate the mean value of delay. Reconfiguring such filtering parameters, based estimate quality, intended precision level, processing power, user requirements
3) The tag 2 may request the anchors 3 to increase the reference signals available for this tag 2 and the anchors 3 may signal the tag 2 the request has been granted (through control signaling) and transmit the additional reference signals.
4) The network may also track users receiving positioning service and accordingly boost the power levels of reference signals on certain cells received with bad SNR.
5) In addition, using correctly received data (CRC pass) to reconstruct transmitted data, using the transmitted data as 'pilots' and estimating delay based on such data. This concept makes a large number of pseudo-pilots available for estimation.

a. However, the resulting delay would be too high for channel estimation for telecommunication (due to time constraints), but the time constraint is good enough for delay estimation in positioning.
b. Since a large number of pseudo-pilots are available, the phase estimation and subsequently the estimation of pseudo ranges improve and which improves the accuracy.
c. Given the tag 2 is uploading content (for example photos) to the server via optical communication network. The correctly decoded content could be used as pseudo-pilots by the anchors.

In the embodiment shown in Fig. 4, the evaluator 6 is comprised by the fixed network and the tag 2 additionally comprises a sensor 10 which provides e.g. data depending on the movement of the tag 2.

Aspects of Power saving:

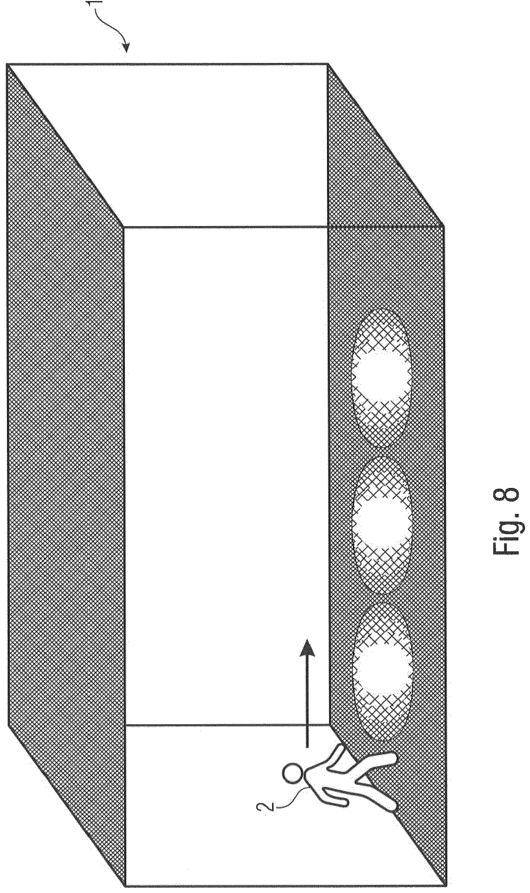

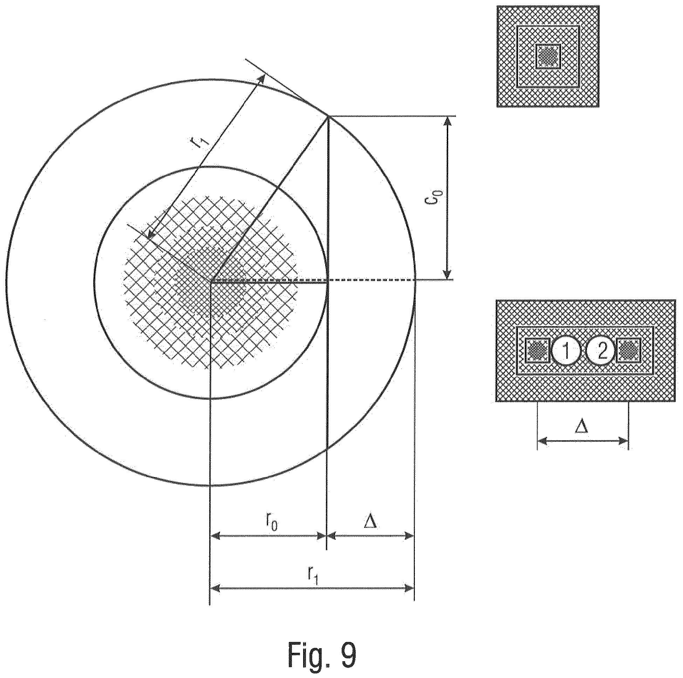

The entity deducing the position of the tag 2, i.e. the evaluator 6, estimates in an embodiment the SNR and infers whether it needs to make additional measurements.
If it is tag 2 computing the position (i.e. if the evaluator 6 is associated with or comprised by the tag 2) and it has deduced that the computation of position is reliable enough, it skips processing further available measurements (be it from additional pilots or be it from pseudo pilots) and saves power. However, if it needs to make more measurements, it continues processing available pilots and pseudo pilots. If the available pilots/pseudo pilots are not sufficient to achieve required resolution, it signals the wish to the network - e.g. via uplink signals to the controller - to make additional pilots available.
The network may command the tag to send known messages on payload data, which serves as pilots for the network.
In one embodiment, an orientation estimation is realized using multiple photodiodes:
If the tag equipped with multiple photodiodes (compare Fig. 9) arranged in certain constellation (for example hemispheric) is used, the orientation relative to anchors can be inferred by comparing the signal strength received for each photodiode.
In a different embodiment, a fusion with additional sensors for increased reliability is envisaged (compare the embodiment shown in Fig. 4):
The additional sensors are, for example, inertial sensors, barometers, imaging receivers. Such information helps e.g. in case of handover between multiple attocells (attocells are access points with coverage range in meters range). In addition, when the tag 2 moves out of coverage region, indicated by detection of fewer than five access points given by five anchors 3, no position fix with TDOA can be found. The coverage range can be extended by means of accelerometer "dead reckoning" approach.
In the following a system for an inertial navigation with position and attitude updates is discussed:
Navigation through corridors is a common navigation scenario in indoor environments (see Fig. 8). Here, anchors are located at long a line as one example of a curve.
Fig. 8 gives a depiction of a typical corridor lighting setup. The person or object being tracked carries a tag 2 capable of receiving optical signals by e.g. at least one photo receiver. The tag 2 may be further equipped with additional sensors (inertial sensors (accelerometers and gyroscopes), digital compass, digital barometers, etc.). The sensors may or may not be co-located in the same physical device, as long as they are able to communicate with low latency. For example: in case of a person being tracked, the photodiodes may be mounted as a headwear, whereas the inertial sensors built in on a shoe or even co-located with a processing device (such as a smartphone).
Assuming calibrated inertial sensors, the distance travelled on the short term can be computed accurately. Issues in inertial navigation arise from long-term drift errors. Hence, the position and attitude (heading information) can be reset with the help of optical wireless network.
Two distinctions are made about the optical transmitter as part of the anchor: either the transmitter of the anchor has data transmission capabilities or the transmitter is simply a lamp (no data transmission capabilities).

Case I: The transmitter has data transmission capabilities:

If the transmitting device i.e. the anchor is equipped with communication capabilities for optical (VLC or infrared) based transmissions, then it broadcasts (at least) the following information:

1. Coordinates (for example: in the local navigation frame)
2. Direction of movement with respect to the local navigation frame (for example when the installation is mounted on a hallway, the attitude is parallel to the walls and flat with respect to the local floor)

Case II: The transmitter has no data transmission capabilities

If the transmitter is not capable of optical data transmission, the above information could be obtained either hardwired into the receiver (for example: as a database) or the receiver could receive the data from other complementary RF-based systems (such as Bluetooth, WiFi etc.).

In Fig. 9 a depiction of a Lambertian Optical Transmitter with two concentric circles depicting isometric lines of power is given on the left. On the right, two variants of receivers of the tag are shown. The receivers enable the measurement of position of the tag by exploiting Lambertian properties.

Assuming that the transmitter has data transmission capabilities using optical wireless, the coordinates of the transmitter are broadcasted by the transmitter. All receivers within the range of this transmitter receive this broadcast message. Since this region has a diameter of several meters, the following can be done to reduce errors on reset:

Assuming that a receiver of a tag has a single photo receiver (upper row on the right of Fig. 9), the tag monitors the fluctuation of optical power and determines the instant it observes a global maxima within the range of this transmitter/anchor. The tag corrects the position obtained with inertial sensors to this value. The attitude may be corrected by using the heading between two resets (or the transmitter may broadcast the local heading). Since $\theta$ and $180 + \theta$ angles are both possible, if the anchor is broadcasting a value of $\theta$, one of these two may be chosen in a way that it corresponds with the recent accelerometer readings.

If the receiver has multiple photo receivers (two are shown in the lower row on the right of Fig. 9) and assuming a Lambertian (or Lambertian-like) transmitter whose radiation pattern forms concentric circles as shown in Fig. 9, the current distance ($r_o$) from the center of the photo transmitter is estimated as follows:

Photodiode 2 monitors the received optical power and determines the maxima at a radius of $r_0 + \Delta$ from the center of the transmitter.

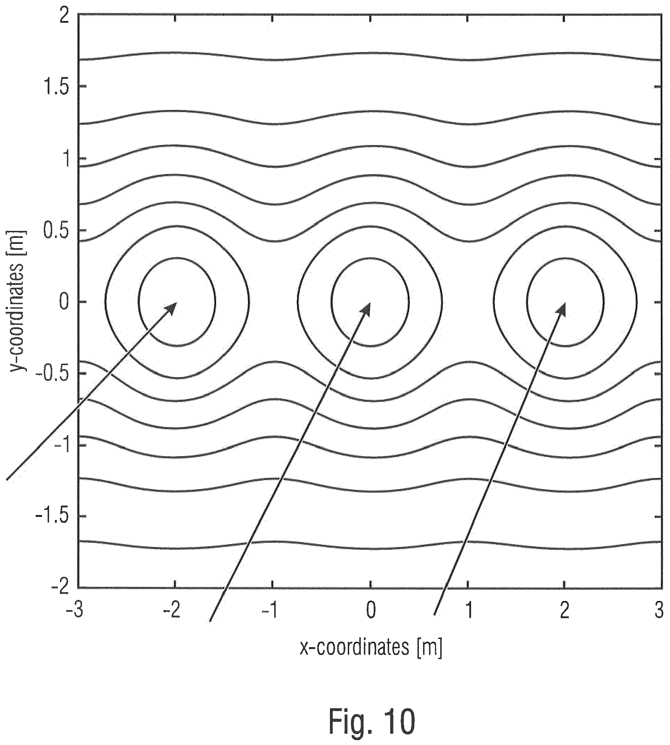

Photodiode 1 keeps the history of observed intensity values and their timestamp. Using this information photodiode 1 determines the time-instant when Photodiode 1 observed the same value of optical power as Photodiode 2 at its maxima (compare Fig. 10 in which three anchors are present and the arrows indicate the detection of time instant when the receiver, i.e. the tag, is directly under the anchor allowing to reset the position calculation).

By fusing information from inertial sensors, it estimates the length of chord $c_0$.

The timestamp between accelerometers and photo-receiver must be synchronized.

The distance $r_0$ can be estimated as:

$$r_0 = \frac{c_0^2}{2\Delta} - \frac{1}{2}\Delta$$

The position corrections are computed as $\Delta x = r_0 \cos(\theta)$ and $y = r_0 \sin(\theta)$ are computed based on attitude of direction of travel with respect to navigation plane.

Likewise, whether the transit happens to the left side or the right side can be ascertained by comparing whether photodiode 1 or photodiode 2 receives a stronger optical power.

For this approach, the position of the anchor and expected attitude of the pathway should be known. This can be broadcasted by the anchor/transmitter or the receiver of the tag has knowledge of this through other means (e.g. through maps and matching the expected values with the computed values).

If the optical transmitter of the anchor is not symmetric in all directions, reset can be done by determining the time instant when maxima is observed.

Note that if at least five anchors are available, the precise positioning system based on optical wireless networks can be turned on.

Some aspects of the system and the method and of some embodiments are repeated:

1. Clustering of anchors, allocation of reference signal (pilots) to enable highly precise measurements of delay
2. Combining the measurements to compute the delay with required precision

   a. Adjusting the measurement parameters (number of available reference points, power allocation etc) dynamically to determine whether the required precision is reached.
   b. Using correctly decoded data as pseudo-pilot signals to increase the number of pilots available.
   c. Stopping further computations to save power or requesting more pilots depending on required precision.

3. Fusing position computed in the downlink transmission and uplink transmission to determine true position, thereby enhancing robustness.

4. Synchronizing the optical network (anchors with each other) enabling TDOA measurements

5. Synchronizing the anchors and network devices enabling TOA measurements

6. Utilizing information from accelerometers to predict the range to the anchor, given that the anchor is blocked (by person, object etc).

7. Forming a cluster of access point (anchors) around the access point (anchor) with the best gain, thereby allowing the user to slide smoothly through the network without disruption. At any point all access points within the cluster could transmit data to the said user. This is particularly important in scenarios like Airport. "Handover aided by Positioning".

Determining the reset values and reset time instant when the tag is under the rank-deficient (semi-sparse) to sparse availability of anchors.

Areas of application are:

- Positioning of objects/robotic arm in an automated factory.
- Positioning of user where EM radiation is to be avoided - such as in a hospital unit.
- Moving of a patient between units in a hospital. Accurately positioning a patient, while (for example) transmitting vital data.
- Precise location of a user in indoor scenario.
- Visually impaired person in areas such as airports, hospitals, computing precise position and navigating them along the way.
- VR applications: The data for VR experience could be transmitted through the VLC communication network, and the precise position and orientation can be determined through the VLC positioning system (together with inertial sensors).
- Assets monitoring: since the tags are potentially bidirectional communication devices, they can report their last known position. Therefore, it can be tracked where they were last before they disappeared.

Although some aspects have been described in the context of an apparatus, it is clear that these aspects also represent a description of the corresponding method. Analogously, aspects described in the context of a method step also represent a description of a corresponding block or item or feature of a corresponding apparatus.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

**Claims**

1. System (1) for determining a position of a tag (2), wherein the system (1) is comprising:

   a plurality of anchors (3),
   wherein the plurality of anchors (3) are located at known positions and are configured to emit light signals,
   a controller (4),
   wherein the controller (4) is configured to control the plurality of anchors (3) with regard to emitting light signals, and
   wherein the controller (4) is configured to assign a given number of anchors (3) of the plurality of anchors (3), to an anchor cluster, wherein anchors (3) belonging to the anchor cluster emit light signals comprising different pilot signals using different frequencies and/or different time slots,
   at least one receiver (5) associated with the tag (2),
   wherein the receiver (5) is configured to receive light signals, and
   an evaluator (6),
   wherein the evaluator (6) is configured to determine the position of the tag (2) based on light signals received by the receiver (5),
   wherein the controller (4) is configured to assign the given number of anchors (3) of the plurality of anchors (3) dynamically to the anchor cluster based on a signal strength of a light signal emitted by the anchors (3) and received by the receiver (5) or based on a signal strength of a light signal emitted by a transmitter (8) associated with the tag (2) and received by uplink receivers (9) associated with the anchors (3).

2. System (1) of claim 1,
   wherein a transmitter (8) associated with the tag (2) is configured to emit a positioning signal request signal, and the controller (4) is configured to initiate in case of a received positioning signal request at least one anchor (3) of the plurality of anchors (3) to emit at least one light signal comprising a pilot signal, and/or
   wherein a transmitter (8) associated with the tag (2) is configured to emit a request signal in case further light signals and/or further pilot signals are required for determining the position of the tag (2), and/or
   wherein a transmitter (8) associated with the tag (2) is configured to emit a request signal comprising information about an anchor (3) from which further light signals and/or further pilot signals are required, and/or
   wherein a transmitter (8) associated with the tag (2) is configured to emit a request signal in case at least one further anchor (3) is required for determining the position of the tag (2), and the controller (4) is configured to treat the given number of anchors (3) and at least one additional anchor (3) of the plurality of anchors (3) as an anchor cluster.

3. System (1) of claim 1 or 2,
   wherein the anchors (3) belonging to the anchor cluster are configured to emit light signals comprising information about the respective position of the anchors (3), and/or
   wherein the anchors (3) belonging to the anchor cluster are configured to emit light signals using orthogonal frequency-division multiplexing.

4. System (1) of claim 1 or 2,
   wherein the controller (4) is configured to assign anchors (3) of the plurality of anchors (3) to various anchor groups, and
   wherein the controller (4) is configured to control anchors (3) such that anchors (3) belonging to an anchor group within the anchor cluster and anchors (3) within the anchor group but outside of the anchor cluster emit light signals comprising identical pilot signal and/or emit light signals using identical frequencies and/or emit light signals using identical time slots.

5. System (1) of any of claims 1 to 4,
   wherein the receiver (5) is configured to evaluate an orientation relative to anchors (3) of the plurality of anchors (3) by comparing a signal strength of received light signals.

6. System (1) of any of claims 1 to 5,
   wherein the receiver (5) is configured to determine phase values based on the pilot signals of the received light signals,
   and
   wherein the evaluator (6) is configured to evaluate the position of the tag (2) based on a time of arrival method and/or based on a time difference of arrival method using delays estimated from the determined phase values.

7. System (1) of any of claims 1 to 6,
   wherein the evaluator (6) is configured to use stored data concerning previous positions of the tag (2) and/or concerning a movement of the tag (2) and/or concerning phase values and/or concerning receiving intensities of received light signals and/or concerning a map of an area in which the system is at least partially located for determining the position of the tag (2) in case that receiving light signals from at least one anchor (3) belonging to the anchor cluster is disturbed and/or in order to increase the accuracy of the determination of the phases and/or of the determination of the position of the tag (2) based on the determined phases.

8. System (1) of any of claims 1 to 7, wherein at least one movement and/or position dependent sensor (10) is associated with the tag (2), wherein the sensor (10) is configured to provide measurement data dependent on a movement and/or on the position of the tag (2), and wherein the evaluator (6) is configured to evaluate the measurement data provided by the sensor (10) for determining the position of the tag (2) in case that receiving light signals from at least one anchor (3) belonging to the anchor cluster is disturbed and/ or in order to increase the accuracy of the determination of the phases and/or of the determination of the position of the tag (2) based on the determined phases.

9. System (1) of any of claims 1 to 8, wherein the system (1) further comprises uplink receivers (9) associated with anchors (3) of the plurality of anchors (3), wherein the uplink receivers (9) are configured to receive signals emitted by a transmitter (8) associated with the tag (2), and wherein the uplink receivers (9) are configured to evaluate whether data comprised by the received signals is error free and to determine phase values based on error free data.

10. System (1) of any of claims 1 to 9, wherein a transmitter (8) associated with the tag (2) is configured to emit signals comprising data known to the evaluator (6), and wherein the evaluator (6) is configured to use the known data for evaluating phases of the signals emitted by the transmitter (8).

11. System (1) of any of claims 1 to 10, wherein at least some anchors (3) of the plurality of anchors (3) are located such that the anchors (3) are evenly distributed, or wherein anchors (3) of the plurality of anchors (3) are located along a curve.

12. System (1) of any of claims 1 to 11, wherein at least the anchors (3) belonging to the anchor cluster are time synchronized, and wherein the tag (2) is configured to perform a time synchronization at least with the anchors (3) belonging to the anchor cluster.

13. System (1) of any of claims 1 to 12, wherein at least one receiver (5, 5') is permanently or temporarily located at a known position, wherein the evaluator (6) is configured to determine distances and/or phases and/ or amplitudes and/or respective errors based on the known position and to provide corresponding data to the controller (4), and wherein the controller (4) is configured to take care of the provided data.

14. System (1) of any of claims 1 to 13, wherein at least one movement and/or position dependent sensor (10) is associated with the tag (2), and wherein the evaluator (6) is configured to provide data to the controller (4) for a synchronization in case data provided by the movement and/or position dependent sensor (10) indicate that the tag (2) rests on a position.

15. Method for determining a position of a tag (2), comprising:

assigning a given number of anchors (3) of a plurality of anchors (3) dynamically to an anchor cluster based on a signal strength of a light signal emitted by the anchors (3) and received by a receiver (5) associated with the tag or based on a signal strength of a light signal emitted by a transmitter (8) associated with the tag (2) and received by uplink receivers (9) associated with anchors (3) of the plurality of anchors (3); wherein the plurality of anchors (3) are located at known positions, and wherein anchors (3) belonging to the anchor cluster emit light signals comprising different pilot signals using different frequencies and/or different time slots, receiving by said receiver (5) light signals emitted by anchors (3) of the plurality of anchors (3), and evaluating the position of the tag (2) based on the received light signals.

**Patentansprüche**

1. System (1) zum Bestimmen einer Position einer Kennzeichnung (2), wobei das System (1) folgende Merkmale aufweist:

eine Mehrzahl von Ankern (3), wobei die Mehrzahl von Ankern (3) an bekannten Positionen angeordnet ist und dazu konfiguriert ist, Lichtsignale zu emittieren, eine Steuerung (4), wobei die Steuerung (4) dazu konfiguriert ist, die Mehrzahl von Ankern (3) in Bezug auf das Emittieren von Lichtsignalen zu steuern und wobei die Steuerung (4) dazu konfiguriert ist, eine gegebene Anzahl von Ankern (3) der Mehrzahl von Ankern (3) einem Ankercluster zuzuweisen, wobei Anker (3), die zu dem Ankercluster gehören, Lichtsignale, die unterschiedliche Pilotsignale aufweisen, unter Verwendung unterschiedlicher Frequenzen und/oder unterschiedlicher Zeitschlitze emittieren,

zumindest einen Empfänger (5), der der Kennzeichnung (2) zugeordnet ist,

wobei der Empfänger (5) dazu konfiguriert ist, Lichtsignale zu empfangen und

eine Auswertungseinrichtung (6),

wobei die Auswertungseinrichtung (6) dazu konfiguriert ist, die Position der Kennzeichnung (2) basierend auf Lichtsignalen, die durch den Empfänger (5) empfangen werden, zu bestimmen,

wobei die Steuerung (4) dazu konfiguriert ist, die gegebene Anzahl von Ankern (3) der Mehrzahl von Ankern (3) dem Ankercluster dynamisch zuzuweisen, basierend auf einer Signalstärke eines Lichtsignals, das durch die Anker (3) emittiert wird und durch den Empfänger (5) empfangen wird, oder basierend auf einer Signalstärke eines Lichtsignals, das durch einen Sender (8) emittiert wird, der der Kennzeichnung (2) zugeordnet ist, und durch Aufwärtsverbindungsempfänger (9) empfangen wird, die den Ankern (3) zugeordnet sind,

2. System (1) gemäß Anspruch 1,
   bei dem ein Sender (8), der der Kennzeichnung (2) zugeordnet ist, dazu konfiguriert ist, ein Positionierungssignal-Anforderungssignal zu emittieren, und die Steuerung (4) dazu konfiguriert ist, im Fall einer empfangenen Positionierungssignalanforderung zumindest einen Anker (3) der Mehrzahl von Ankern (3) zu initiieren, um zumindest ein Lichtsignal zu emittieren, das ein Pilotsignal aufweist,
   und/oder
   wobei ein Sender (8), der der Kennung (2) zugeordnet ist, dazu konfiguriert ist, ein Anforderungssignal zu emittieren, falls weitere Lichtsignale und/oder weitere Pilotsignale zum Bestimmen der Position der Kennzeichnung (2) erforderlich sind,
   und/oder
   wobei ein Sender (8), der der Kennzeichnung (2) zugeordnet ist, dazu konfiguriert ist, ein Anforderungssignal zu emittieren, das Informationen über einen Anker (3) aufweist, von dem weitere Lichtsignale und/oder weitere Pilotsignale erforderlich sind,
   und/oder
   wobei ein Sender (8), der der Kennzeichnung (2) zugeordnet ist, dazu konfiguriert ist, ein Anforderungssignal zu emittieren, falls zumindest ein weiterer Anker (3) zum Bestimmen der Position der Kennzeichnung (2) erforderlich ist, und die Steuerung (4) dazu konfiguriert ist, die gegebene Anzahl von Ankern (3) und zumindest einen zusätzlichen Anker (3) der Mehrzahl von Ankern (3) als ein Ankercluster zu behandeln.

3. System (1) gemäß Anspruch 1 oder 2,

bei dem die Anker (3), die zu dem Ankercluster gehören, dazu konfiguriert sind, Lichtsignale zu emittieren, die Informationen über die jeweilige Position der Anker (3) aufweisen, und/oder

wobei die Anker (3), die zu dem Ankercluster gehören, dazu konfiguriert sind, Lichtsignale unter Verwendung von orthogonalem Frequenzmultiplexen zu emittieren.

4. System (1) gemäß Anspruch 1 oder 2,
   bei dem die Steuerung (4) dazu konfiguriert ist, Anker (3) der Mehrzahl von Ankern (3) verschiedenen Ankergruppen zuzuweisen und
   bei dem die Steuerung (4) dazu konfiguriert ist, Anker (3) zu steuern, so dass Anker (3), die zu einer Ankergruppe in dem Ankercluster gehören und Anker (3), die in der Ankergruppe aber außerhalb des Ankerclusters sind, Lichtsignale emittieren, die ein identisches Pilotsignal aufweisen und/oder Lichtsignale unter Verwendung identischer Frequenzen emittieren und/oder Lichtsignale unter Verwendung identischer Zeitschlitze emittieren.

5. System (1) gemäß einem der Ansprüche 1 bis 4,
   bei dem der Empfänger (5) dazu konfiguriert ist, eine Ausrichtung relativ zu Ankern (3) der Mehrzahl von Ankern (3) durch Vergleichen einer Signalstärke der empfangenen Lichtsignale auszuwerten.

6. System (1) gemäß einem der Ansprüche 1 bis 5,
   bei dem der Empfänger (5) dazu konfiguriert ist, Phasenwerte basierend auf den Pilotsignalen der empfangenen Lichtsignale zu bestimmen, und
   wobei die Auswertungseinrichtung (6) dazu konfiguriert ist, die Position der Kennzeichnung (2) basierend auf einem Ankunftszeit-Verfahren und/oder basierend auf einem Zeitdifferenz-der-Ankunft-Verfahren auszuwerten, unter Verwendung von Verzögerungen, die von den bestimmten Phasenwerten geschätzt werden.

7. System (1) gemäß einem der Ansprüche 1 bis 6,
   bei dem die Auswertungseinrichtung (6) dazu konfiguriert ist, gespeicherte Daten zu verwenden, die sich auf vorhergehende Positionen der Kennzeichnung (2) beziehen und/oder auf eine Bewegung der Kennzeichnung (2) beziehen und/oder auf Phasenwerte beziehen und/oder auf ein Empfangen von Intensitäten empfangener Lichtsignale beziehen und/oder auf eine Karte eines Bereichs beziehen, in dem das System zumindest teilweise positioniert ist, zum Bestimmen der Position der Kennzeichnung (2), falls das Empfangen von Lichtsignalen von zumindest einem Anker (3), der zu dem Ankercluster gehört, gestört ist und/oder um die Genauigkeit der Bestimmung der Phasen und/oder der Bestimmung der Position der Kennzeichnung (2) basierend auf den bestimmten Phasen zu erhöhen.

8. System (1) gemäß einem der Ansprüche 1 bis 7, bei dem der Kennzeichnung (2) zumindest ein bewegungs- und/oder positionsabhängiger Sensor (10) zugeordnet ist, wobei der Sensor (10) dazu konfiguriert ist, Messdaten in Abhängigkeit von einer Bewegung und/oder von der Position der Kennzeichnung (2) bereitzustellen und wobei die Auswertungseinrichtung (6) dazu konfiguriert ist, die Messdaten auszuwerten, die durch den Sensor (10) zum Bestimmen der Position der Kennzeichnung (2) bereitgestellt werden, falls das Empfangen der Lichtsignale von zumindest einem Anker (3), der zu dem Ankercluster gehört, gestört ist und/oder um die Genauigkeit der Bestimmung der Phasen und/oder der Bestimmung der Position der Kennzeichnung (2) basierend auf den bestimmten Phasen zu erhöhen,

9. System (1) gemäß einem der Ansprüche 1 bis 8, bei dem das System (1) ferner Aufwärtsverbindungsempfänger (9) aufweist, die Ankern (3) der Mehrzahl von Ankern (3) zugeordnet sind, wobei die Aufwärtsverbindungsempfänger (9) dazu konfiguriert sind, Signale zu empfangen, die durch einen Sender (8) emittiert werden, der der Kennzeichnung (2) zugeordnet ist und wobei die Aufwärtsverbindungempfänger (9) dazu konfiguriert sind, auszuwerten, ob Daten, die in den empfangenen Signalen enthalten sind, fehlerfrei sind und um basierend auf fehlerfreien Daten Phasenwerte zu bestimmen.

10. System (1) gemäß einem der Ansprüche 1 bis 9, bei dem ein Sender (8), der der Kennzeichnung (2) zugeordnet ist, dazu konfiguriert ist, Signale zu emittieren, die Daten aufweisen, die der Auswertungseinrichtung (6) bekannt sind und wobei die Auswertungseinrichtung (6) dazu konfiguriert ist, die bekannten Daten zum Auswerten von Phasen der Signale zu verwenden, die durch den Sender (8) emittiert werden.

11. System (1) gemäß einem der Ansprüche 1 bis 10, bei dem zumindest einige Anker (3) der Mehrzahl von Ankern (3) angeordnet sind, so dass die Anker (3) gleichmäßig verteilt sind oder wobei Anker (3) der Mehrzahl von Ankern (3) entlang einer Kurve angeordnet sind.

12. System (1) gemäß einem der Ansprüche 1 bis 11, bei dem zumindest die Anker (3), die zu dem Ankercluster gehören, zeitsynchronisiert sind und wobei die Kennzeichnung (2) dazu konfiguriert ist, zumindest mit den Ankern (3), die zu dem Ankercluster gehören, eine Zeitsynchronisation durchzuführen.

13. System (1) gemäß einem der Ansprüche 1 bis 12, bei dem zumindest ein Empfänger (5, 5') dauerhaft oder vorübergehend an einer bekannten Position angeordnet ist, wobei die Auswertungseinrichtung (6) dazu konfiguriert ist, basierend auf der bekannten Position Abstände und/oder Phasen und/oder Amplituden und/oder jeweilige Fehler zu bestimmen, und entsprechende Daten der Steuerung (4) bereitzustellen und wobei die Steuerung (4) dazu konfiguriert ist, die bereitgestellten Daten zu berücksichtigen.

14. System (1) gemäß einem der Ansprüche 1 bis 13, bei dem der Kennzeichnung (2) zumindest ein bewegungs- und/oder positionsabhängiger Sensor (10) zugeordnet ist und wobei die Auswertungseinrichtung (6) dazu konfiguriert ist, der Steuerung (4) Daten für eine Synchronisation bereitzustellen, falls Daten, die durch den bewegungs- und/oder positionsabhängigen Sensor (10) bereitgestellt werden, anzeigen, dass die Kennzeichnung (2) an einer Position ruht.

15. Verfahren zum Bestimmen einer Position einer Kennzeichnung (2), das folgende Schritte aufweist:

dynamisches Zuordnen einer gegebenen Anzahl von Ankern (3) einer Mehrzahl von Ankern (3) zu einem Ankercluster, basierend auf einer Signalstärke eines Lichtsignals, das durch die Anker (3) emittiert wird und durch einen Empfänger (5) empfangen wird, der der Kennzeichnung zugeordnet ist, oder basierend auf einer Signalstärke eines Lichtsignals, das durch einen Sender (8) emittiert wird, der der Kennzeichnung (2) zugeordnet ist, und durch Aufwärtsverbindungsempfänger (9) empfangen wird, die Ankern (3) der Mehrzahl von Ankern (3) zugeordnet sind; wobei die Mehrzahl von Ankern (3) an bekannten Positionen angeordnet ist, und wobei Anker (3), die zu dem Ankercluster gehören, Lichtsignale, die unterschiedliche Pilotsignale aufweisen, unter Verwendung unterschiedlicher Frequenzen und/oder unterschiedlicher Zeitschlitze emittieren, Empfangen, durch den Empfänger (5), von Lichtsignalen, die durch Anker (3) der Mehrzahl von Ankern (3) emittiert werden und Auswerten der Position der Kennzeichnung (2) basierend auf den empfangenen Lichtsignalen.

**Revendications**

1. Système (1) pour déterminer une position d'une étiquette (2), dans lequel le système (1) comprend:

une pluralité d'ancres (3),

dans lequel la pluralité d'ancres (3) sont situées à des positions connues et sont configurées pour émettre des signaux lumineux,

un moyen de commande (4),

dans lequel le moyen de commande (4) est configuré pour commander la pluralité d'ancres (3) en ce qui concerne le fait d'émettre des signaux lumineux, et

dans lequel le moyen de commande (4) est configuré pour attribuer un nombre donné d'ancres (3) de la pluralité d'ancres (3) à un regroupement d'ancres, dans lequel les ancres (3) appartenant au regroupement d'ancres émettent des signaux lumineux comprenant différents signaux pilotes en utilisant différentes fréquences et/ou différents intervalles de temps,

au moins un récepteur (5) associé à l'étiquette (2),

dans lequel le récepteur (5) est configuré pour recevoir des signaux lumineux, et

un évaluateur (6),

dans lequel l'évaluateur (6) est configuré pour déterminer la position de l'étiquette (2) sur base des signaux lumineux reçus par le récepteur (5),

dans lequel le moyen de commande (4) est configuré pour attribuer de manière dynamique le nombre donné d'ancres (3) de la pluralité d'ancres (3) au regroupement d'ancres sur base d'une intensité de signal d'un signal lumineux émis par les ancres (3) et reçu par le récepteur (5) ou sur base d'une intensité de signal d'un signal lumineux émis par un émetteur (8) associé à l'étiquette (2) et reçu par des récepteurs de liaison ascendante (9) associés aux ancres (3).

2. Système (1) selon la revendication 1,

dans lequel un émetteur (8) associé à l'étiquette (2) est configuré pour émettre un signal de demande de signal de positionnement, et le moyen de commande (4) est configuré pour initier, en cas de demande de signal de positionnement reçue, au moins une ancre (3) de la pluralité d'ancres (3) pour émettre au moins un signal lumineux comprenant un signal pilote, et/ou

dans lequel un émetteur (8) associé à l'étiquette (2) est configuré pour émettre un signal de demande au cas où d'autres signaux lumineux et/ou d'autres signaux pilotes sont requis pour déterminer la position de l'étiquette (2), et/ou

dans lequel un émetteur (8) associé à l'étiquette (2) est configuré pour émettre un signal de demande comprenant des informations sur une ancre (3) à partir de laquelle sont requis d'autres signaux lumineux et/ou d'autres signaux pilotes, et/ou

dans lequel un émetteur (8) associé à l'étiquette (2) est configuré pour émettre un signal de demande au cas où au moins une autre ancre (3) est requise pour déterminer la position de l'étiquette (2), et le moyen de commande (4) est configuré pour traiter le nombre donné d'ancres (3) et au moins une ancre additionnelle (3) de la pluralité d'ancres (3) comme un regroupement d'ancres.

3. Système (1) selon la revendication 1 ou 2,

dans lequel les ancres (3) appartenant au regroupement d'ancres sont configurées pour émettre des signaux lumineux comprenant des informations sur la position respective des ancres (3), et/ou

dans lequel les ancres (3) appartenant au regroupement d'ancres sont configurées pour émettre des signaux lumineux à l'aide d'un multiplexage orthogonal par répartition en fréquence.

4. Système (1) selon la revendication 1 ou 2,

dans lequel le moyen de commande (4) est configuré pour attribuer des ancres (3) de la pluralité d'ancres (3) à divers groupes d'ancres, et

dans lequel le moyen de commande (4) est configuré pour commander les ancres (3) de sorte que les ancres (3) appartenant à un groupe d'ancres dans le regroupement d'ancres et les ancres (3) dans le groupe d'ancres, mais en-dehors du regroupement d'ancres émettent des signaux lumineux comprenant un signal pilote identique et/ou émettent des signaux lumineux en utilisant des fréquences identiques et/ou émettent des signaux lumineux en utilisant des intervalles de temps identiques.

5. Système (1) selon l'une quelconque des revendications 1 à 4,

dans lequel le récepteur (5) est configuré pour évaluer une orientation par rapport aux ancres (3) de la pluralité d'ancres (3) en comparant une intensité de signal des signaux lumineux reçus.

6. Système (1) selon l'une quelconque des revendications 1 à 5,

dans lequel le récepteur (5) est configuré pour déterminer les valeurs de phase sur base des signaux pilotes des signaux lumineux reçus, et

dans lequel l'évaluateur (6) est configuré pour évaluer la position de l'étiquette (2) sur base d'une méthode utilisant le temps d'arrivée et/ou sur base d'une méthode utilisant la différence de temps d'arrivée à l'aide des retards estimés à partir des valeurs de phase déterminées.

7. Système (1) selon l'une quelconque des revendications 1 à 6,

dans lequel l'évaluateur (6) est configuré pour utiliser les données mémorisées relatives aux positions antérieures de l'étiquette (2) et/ou relatives à un déplacement de l'étiquette (2) et/ou relatives aux valeurs de phase et/ou relatives aux intensités de réception des signaux lumineux reçus et/ou relatives à une carte d'une zone dans laquelle le système est situé au moins partiellement pour déterminer la position de l'étiquette (2) au cas où la réception de signaux lumineux d'au moins une ancre (3) appartenant au regroupement d'ancres est perturbée et/ou pour augmenter la précision de la détermination des phases et/ou de la détermination de la position de l'étiquette (2) sur base des phases déterminées.

8. Système (1) selon l'une quelconque des revendications 1 à 7,
dans lequel au moins un capteur (10) dépendant du déplacement et/ou de la position est associé à l'étiquette (2),
dans lequel le capteur (10) est configuré pour fournir des données de mesure dépendant d'un déplacement et/ou de la position de l'étiquette (2), et
dans lequel l'évaluateur (6) est configuré pour évaluer les données de mesure fournies par le capteur (10) pour déterminer la position de l'étiquette (2) au cas où la réception de signaux lumineux d'au moins une ancre (3) appartenant au regroupement d'ancres est perturbée et/ou pour augmenter la précision de la détermination des phases et/ou de la détermination de la position de l'étiquette (2) sur base des phases déterminées.

9. Système (1) selon l'une quelconque des revendications 1 à 8,
dans lequel le système (1) comprend par ailleurs des récepteurs de liaison ascendante (9) associés à des ancres (3) de la pluralité d'ancres (3),
dans lequel les récepteurs de liaison ascendante (9) sont configurés pour recevoir les signaux émis par un émetteur (8) associé à l'étiquette (2), et
dans lequel les récepteurs de liaison ascendante (9) sont configurés pour évaluer si les données comprises dans les signaux reçus sont exemptes d'erreur et pour déterminer les valeurs de phase sur base de données exemptes d'erreur.

10. Système (1) selon l'une quelconque des revendications 1 à 9,
dans lequel un émetteur (8) associé à l'étiquette (2) est configuré pour émettre des signaux comprenant des données connues de l'évaluateur (6), et
dans lequel l'évaluateur (6) est configuré pour utiliser les données connues pour évaluer les phases des signaux émis par l'émetteur (8).

11. Système (1) selon l'une quelconque des revendications 1 à 10, dans lequel au moins certaines ancres (3) de la pluralité d'ancres (3) sont situées de sorte que les ancres (3) soient réparties uniformément,
ou
dans lequel les ancres (3) de la pluralité d'ancres (3) sont situées le long d'une courbe.

12. Système (1) selon l'une quelconque des revendications 1 à 11,
dans lequel au moins les ancres (3) appartenant au regroupement d'ancres sont synchronisées dans le temps, et
dans lequel l'étiquette (2) est configurée pour effectuer une synchronisation temporelle au moins avec les ancres (3) appartenant au regroupement d'ancres.

13. Système (1) selon l'une quelconque des revendications 1 à 12,
dans lequel au moins un récepteur (5, 5') est situé en permanence ou temporairement à une position connue,
dans lequel l'évaluateur (6) est configuré pour déterminer les distances et/ou les phases et/ou les amplitudes et/ou les erreurs respectives sur base de la position connue et pour fournir les données correspondantes au moyen de commande (4), et
dans lequel le moyen de commande (4) est configuré pour prendre en compte les données fournies.

14. Système (1) selon l'une quelconque des revendications 1 à 13,
dans lequel au moins un capteur (10) dépendant du déplacement et/ou de la position est associé à l'étiquette (2), et
dans lequel l'évaluateur (6) est configuré pour fournir des données au moyen de commande (4) pour une synchronisation au cas où les données fournies par le capteur dépendant du déplacement et/ou de la position (10) indiquent que l'étiquette (2) se trouve à une position.

15. Procédé pour déterminer une position d'une étiquette (2),
comprenant le fait de:

attribuer de manière dynamique un nombre donné d'ancres (3) d'une pluralité d'ancres (3) à un regroupement d'ancres sur base d'une intensité de signal d'un signal lumineux émis par les ancres (3) et reçu par un récepteur (5) associé à l'étiquette ou sur base d'une intensité de signal d'un signal lumineux émis par un émetteur (8) associé à l'étiquette (2) et reçu par des récepteurs de liaison ascendante (9) associés à des ancres (3) de la pluralité d'ancres (3);
dans lequel la pluralité d'ancres (3) sont situées à des positions connues, et dans lequel les ancres (3) appartenant au regroupement d'ancres émettent des signaux lumineux comprenant différents signaux pilotes en utilisant différentes fréquences et/ou différents intervalles de temps, recevoir par ledit récepteur (5) des signaux lumineux émis par des ancres (3) de la pluralité d'ancres (3), et
évaluer la position de l'étiquette (2) sur base des signaux lumineux reçus.

Fig. 1

Fig. 2

Fig. 3

Fig. 4

Fig. 5

Fig. 6

Fig. 7

Fig. 8

EP 3 336 574 B1

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160248506 A1
- CN 105674986
- CN 105738868

- WO 2016269112 A
- US 20150323647 A1

**Non-patent literature cited in the description**

- **LIANG YIN ; XIPING WU ; HARALD HAAS.** Indoor Visible Light Positioning with Angle Diversity Transmitter. *IEEE 82nd VTC-Fall,* 2015

- **JEAN ARMSTRONG ; Y. AHMET SEKERCIOGLU ; ADRIAN NEILD.** Visible Light Positioning: A Roadmap for International Standardization. *IEEE Communications Magazine,* December 2013
- **BIRENDRA GHIMIRE.** *Time and frequency synchronization in optical wireless OFDM networks*